Europäisches Patentamt

European Patent Office

Office européen des brevets

(11) Publication number: **0 194 147**
A2

(12) **EUROPEAN PATENT APPLICATION**

(21) Application number: 86301588.9

(22) Date of filing: 06.03.86

(51) Int. Cl.⁴: **C 08 J 3/20**, C 08 L 23/02, C 08 K 5/15, C 08 K 5/00 // (C08L23/02, 67:04)

(30) Priority: 06.03.85 GB 8505803

(43) Date of publication of application: 10.09.86 Bulletin 86/37

(84) Designated Contracting States: **AT BE DE GB IT NL**

(71) Applicant: **Polyolefine Fibres & Engineering Company Limited, 126, Millshaw, Beeston Ring Road, Leeds West Yorkshire LS11 8DA (GB)**

(72) Inventor: **Slack, Philip Trevor Upper Rooks Hall, Norwood Green Hill Lightcliff, Halifax West Yorkshire, HX3 8QZ (GB)**

(74) Representative: **McCall, John Douglas et al, H. L. Cottrell & Co. Kings Building South Church Side, Hull North Humberside, HU1 1RR (GB)**

(54) Improvements in or relating to the colouration of polyolefins.

(57) A method of producing coloured polyolefin material by admixing caprolactone, preferably ε-caprolactone with polyolefin and a pigment

EP 0 194 147 A2

0194147

-1-

## IMPROVEMENTS IN OR RELATING TO THE
## COLOURATION OF POLYOLEFINS

The present invention relates to the colouration of polyolefins.

When polyolefin such as polypropylene chips are coloured with the usual pigment dispersions on the market for instance the products sold under the name:- SANYLENE pigment dispersions made by MESSRS. SANDOZ LUFILENE pigment dispersions made by B.A.S.F. FILOFIN pigment dispersions made by CIBA GEIGY and spun up into textile fibres they usually have in comparison to other synthetic textile fibres a dull and lifeless appearance. Our co-pending U.K. Patent application no. 8314859 discloses that pure disperse dyestuffs and solvent dyestuffs in ground press cake form may when add mixed with $\xi$-caprolactone produce brilliantly coloured polyolefin such as polypropylene fibres when spun from an admixture with polypropylene chips.

It has now been found that many of the pigments normally used to colour polyolefin such as polypropylene fibres and which normally generally give a dull and drab finish will when admixed with a small quantity of $\xi$-polycaprolactone produce fibres with a much higher transparent and brighter effect.

According to the present invention there is provided a method of producing coloured polyofin material com-

-2-

prising admixing caprolactone with polyolefin and a pigment.

Preferably the polyolefin comprises polypropylene.

Preferably the polypropylene  is in chip form.

The caprolactone may comprise  £ caprolactone.

The mixture of polyolefin, caprolactone and pigment may be extruded to form fibres of coloured polyolefin.

The present invention also extends to coloured polyolefin produced by the method defined above.

The present invention will now be further described with reference to the following examples.

In the examples below fibres were produced using pigments from the following table:-

TABLE   A

Pigment Cl. Nos.

1.    Pigment Green Cl. No. 7

2.    Pigment Green Cl. No. 36

3.    Pigment Yellow Cl. No. 139

4.    Pigment Blue Cl. No. 15:3

5.    Pigment Blue Cl. No. 60

6.    Pigment Brown Cl. No. 25

7.    Pigment Red Cl. No. 176

8.    Pigment Violet Cl. No. 23

9.    Pigment Blue Cl. No. 15

10.   Pigment Black Cl. No. 7

Example 1:

To 100 kg. of homopolymer chips, fibre spinning grade, melt flow index 11 were added 0.25% uv stabiliser and 1% of red pigment Cl. No. 176.  This was extruded and spun up into 15 denier round cross section fibres in the normal way.  The lustre of the fibre was dull and the colour lacked life.

Example 2:

Example 1 was repeated but in addition 1.0% of $\varepsilon$-polycaprolactone with a melting point of 65°C was added to the admixture.    When spun up into 15 denier textile fibres in the normal way it was surprisingly found that the fibres had a high lustre and the colour was much more transparent and vibrant.

Example 3:

Examples 1 and 2 were repeated but using a spinneret, from which fibres were spun, having capilliaries or orifices of delta i.e. triangular cross-section instead of circular cross-section.

It is well known that normal pigments without ε-polycaprolactone spun through orifices of delta cross-section produce a brighter effect than fibres spun through orifices of circular cross-section.    However, when ε-polycaprolactone is added to the formulation the degree of brilliance is enhanced as was shown by comparing examples 1 and 2.

Examples 1, 2 and 3 were repeated for each of the pigments listed in the table above.

A comparison of transparency and colour "life" was made in each case.    Surprisingly the fibre containing in addition to the polypropylene,  ε-caprolactone was much brighter, cleaner looking, more transparent and with a much higher surface gloss and more pleasing non waxy or soapy handle.

A further trial was made by mixing together three of the basic pigments listed in the table above to produce a modern vogue shade as would be used in the carpet industry.

This colour was extruded in the form of 15 denier fibres made from an admixture of polypropylene and ξ-polycaprolactone polymers. The resulting fibre was spun up into yarn in the normal way on a semi worsted yarn spinning machine and tufted into (a) cut loop tufted carpet and (b) a cut pile carpet.

After finishing the carpet was examined and it was found impossible to distinguish it from a 100% acrylic carpet from the point of view of lustre, richness of colour, feel and appearance.

Polypropylene carpets have traditionally had a dull lack lustre appearance with a "soapy" or waxy feel and handle.

Carpets made from fibre according to the present invention have a strong market appeal both from a colour and handle effect.

0194147

CLAIMS.

1.  A method of producing coloured polyolefin material, characterised by admixing caprolactone with polyolefin and a pigment.

2.  A method as claimed in claim 1, characterised in that the polyolefin comprises polypropylene.

3.  A method as claimed in claim 2, characterised in that the polypropylene is in chip form.

4.  A method as claimed in any one of the preceding claims, characterised in that the caprolactone comprises $\epsilon$-caprolactone.

5.  A method as claimed in any one of the preceding claims, characterised in that the mixture of polyolefin, caprolactone and pigment is extruded to form fibres of coloured polyolefin.

6.  Coloured polyolefin produced by the method as claimed in any one of the preceding claims.